# EUROPEAN PATENT APPLICATION

(11) **EP 3 584 956 A1**
(43) Date of publication of application: **25.12.2019**
(21) Application number: 19178124.4
(22) Date of filing: 04.06.2019
(51) Int. Cl.: H04B 7/185

(54) **AIRBORNE MESH NETWORK FOR INFORMATION EXCHANGE**

(30) Priority: 18.06.2018 GB 201809928
(71) Applicant: GE Aviation Systems Limited, Cheltenham Gloucestershire GL52 8SF (GB)
(72) Inventor: PARKER, Edward, Cheltenham, Gloucestershire GL52 8SF (GB); SCHWINDT, Stefan, Cheltenham, GLoucestershire GL52 8SF (GB)
(74) Representative: Openshaw & Co.

(57) **Abstract**

Systems and techniques to facilitate airborne mesh network information exchange are presented. In an example, an air traffic communication system 102 can include a mesh network component 104 and a traffic management component 106. The mesh network component generates a mesh network of communication datalinks 606 associated with one or more aircrafts 402 based on broadcast data that includes a set of broadcasts associated with an aircraft surveillance system 404 for the one or more aircrafts. The traffic management component augments air traffic data and weather data provided by an air traffic management system with sensor data received via the mesh network.

## Description

### TECHNICAL FIELD

This disclosure relates generally to aviation systems.

### BACKGROUND

A control system for an aircraft can employ radio broadcasts and/or sensors to determine an airspace environment associated with the aircraft. The radio broadcasts and/or sensors can also facilitate routing of the aircraft. However, radio coverage of airspace can be limited in certain locations such as, for example, when flying over oceans and/or when flying over remote land areas. As such, situational awareness of an aircraft can be limited to range of sensors and/or fidelity of sensors for the aircraft. For air traffic, range is limited to power of broadcasts (e.g., power constraints), performance of receiving equipment (e.g., power, cost, noise floor, etc.) for an aircraft, etc. Furthermore, sensors for an aircraft generally cannot detect at least a portion of phenomena for an airspace environment. Range of sensors for an aircraft are also generally limited. Therefore, an improved navigation control system for an aircraft and/or an improved air traffic management system for an aircraft is desired.

### SUMMARY

The following presents a simplified summary of the specification in order to provide a basic understanding of some aspects of the specification. This summary is not an extensive overview of the specification. It is intended to neither identify key or critical elements of the specification, nor delineate any scope of the particular implementations of the specification or any scope of the claims. Its sole purpose is to present some concepts of the specification in a simplified form as a prelude to the more detailed description that is presented later.

In accordance with an example aspect, a system includes a mesh network component and a traffic management component. The mesh network component generates a mesh network of communication datalinks associated with one or more aircrafts based on broadcast data that includes a set of broadcasts associated with an aircraft surveillance system for the one or more aircrafts. The traffic management component augments air traffic data and weather data provided by an air traffic management system with sensor data received via the mesh network.

According to another example aspect, method is provided. The method includes detecting, by a system comprising a processor, broadcast data that includes a set of broadcasts associated with a set of aircrafts. The method also includes generating, by the system, a mesh network of communication datalinks between the set of aircrafts based on the broadcast data. Furthermore, the method includes augmenting, by the system, air traffic data and weather data provided by an air traffic management system with sensor data received via the mesh network.

According to yet another example aspect, a computer readable storage device comprising instructions that, in response to execution, cause a system comprising a processor to perform operations, comprising: detecting a set of unidirectional broadcasts associated with a set of aircrafts, generating a mesh network of communication datalinks between the set of aircrafts based on the set of unidirectional broadcasts, and augmenting air traffic data and weather data provided by an air traffic management system with sensor data received via the mesh network.

The following description and the annexed drawings set forth certain illustrative aspects of the specification. These aspects are indicative, however, of but a few of the various ways in which the principles of the specification may be employed. Other advantages and novel features of the specification will become apparent from the following detailed description of the specification when considered in conjunction with the drawings.

### BRIEF DESCRIPTION OF THE DRAWINGS

Numerous aspects, implementations, objects and advantages of the present invention will be apparent upon consideration of the following detailed description, taken in conjunction with the accompanying drawings, in which like reference characters refer to like parts throughout, and in which:
FIG. 1 illustrates a high-level block diagram of an example air traffic communication component, in accordance with one or more embodiments described herein;
FIG. 2 illustrates a high-level block diagram of another example air traffic communication component, in accordance with one or more embodiments described herein;
FIG. 3 illustrates a high-level block diagram of yet another example air traffic communication component, in accordance with one or more embodiments described herein;
FIG. 4 illustrates an example system for airborne mesh network information exchange, in accordance with one or more embodiments described herein;
FIG. 5 illustrates example augmented air traffic data, in accordance with one or more embodiments described herein;
FIG. 6 illustrates an example system associated with a mesh network, in accordance with one or more embodiments described herein;
FIG. 7 depicts a flow diagram of an example method for facilitating airborne mesh network information exchange, in accordance with one or more embodiments described herein;
FIG. 8 depicts a flow diagram of an example method for facilitating airborne mesh network information exchange, in accordance with one or more embodiments described herein;
FIG. 9 is a schematic block diagram illustrating a suitable operating environment; and
FIG. 10 is a schematic block diagram of a sample-computing environment.

### DETAILED DESCRIPTION

Various aspects of this disclosure are now described with reference to the drawings, wherein like reference numerals are used to refer to like elements throughout. In the following description, for purposes of explanation, numerous specific details are set forth in order to provide a thorough understanding of one or more aspects. It should be understood, however, that certain aspects of this disclosure may be practiced without these specific details, or with other methods, components, materials, etc. In other instances, well-known structures and devices are shown in block diagram form to facilitate describing one or more aspects.

Systems and techniques for airborne mesh network information exchange are presented. For instance, improved navigation control for an aircraft and/or improved air traffic management for an aircraft can be provided by employing a novel airborne mesh network for secure and/or redundant information exchange. In an embodiment, a mesh network of direct links between aircrafts and/or an air traffic communication system can be established. In an aspect, broadcasts of aircrafts (e.g., unidirectional broadcasts of aircrafts) can be detected to locate aircrafts in a certain vicinity. In an example, the broadcasts can be Automatic Dependent Surveillance-Broadcasts. Additionally or alternatively, the broadcasts can be traffic collision avoidance system broadcasts. In another aspect, using location information from the detected aircrafts, a directional radio connection (e.g., using mechanically scanned directional antenna, an active electronic array or passive electronic array) or a laser can be employed to establish high bandwidth connections associated with the detected aircrafts. In certain embodiments, negotiation of high bandwidth connections can be performed to ensure that a maximum number of aircrafts are contained within the mesh network. For example, if each aircraft supports three connections, it can be ensured that no communication links are duplicated such that each aircraft is in communication with two other aircrafts other than on a communication link currently being employed. In yet another aspect, data such as, for example, sensor data, air traffic data, weather data, wind data, voice data and/or other data can be shared via the high bandwidth connections associated with the mesh network. Additionally or alternatively, real-time data associated with aircrafts can be obtained via the high bandwidth connections associated with the mesh network. In an embodiment, the high bandwidth connections associated with the mesh network can provide an internet protocol (IP) based system for communication between aircrafts and/or an air traffic communication system. By employing the high bandwidth connections associated with the mesh network, a navigation route for an aircraft can be improved and/or flight performance for an aircraft can be improved. In one example, by employing the high bandwidth connections associated with the mesh network, a traffic route for an aircraft can be determined to minimize potential for collisions and/or unwanted environment phenomena. Furthermore, communication between aircrafts and/or an air traffic communication system can be improved by employing the high bandwidth connections associated with the mesh network. For example, performance of communication channels between aircrafts and/or an air traffic communication system can be improved. In another example, data transfer rates between aircrafts and/or an air traffic communication system can be increased. In yet another example, resilience (e.g., safety, security and/or reliability) of communications between aircrafts and/or an air traffic communication system can be improved. Moreover, a navigation control system for aircrafts and/or an air traffic management system for aircrafts can be improved.

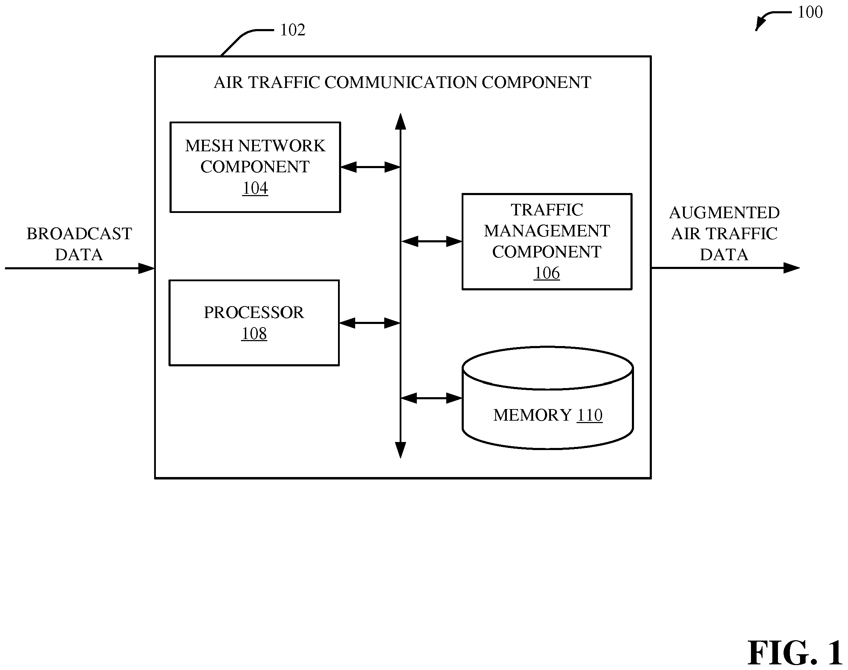

Referring initially to FIG. 1, there is illustrated an example system 100 that provides airborne mesh network information exchange, according to an aspect of the subject disclosure. The system 100 can be associated with a navigation control system for an aircraft and/or an air traffic management system for an aircraft. The system 100 can also be employed by various systems, such as, but not limited to aviation systems, control systems, control and interface systems, aircraft traffic management systems, navigation control systems, controller-pilot data link communication systems, vehicle systems, transportation systems, and the like. Moreover, the system 100 and/or the components of the system 100 can be employed to use hardware and/or software to solve problems that are highly technical in nature (e.g., related to aviation, related to aircrafts, etc.), that are not abstract and that cannot be performed as a set of mental acts by a human.

The system 100 can include an air traffic communication component 102. In FIG. 1, the air traffic communication component 102 includes a mesh network component 104 and a traffic management component 106. Aspects of the systems, apparatuses or processes explained in this disclosure can constitute machine-executable component(s) embodied within machine(s), e.g., embodied in one or more computer readable mediums (or media) associated with one or more machines. Such component(s), when executed by the one or more machines, e.g., computer(s), computing device(s), virtual machine(s), etc. can cause the machine(s) to perform the operations described. The system 100 (e.g., the air traffic communication component 102) can include memory 110 for storing computer executable components and instructions. The system 100 (e.g., the air traffic communication component 102) can further include a processor 108 to facilitate operation of the instructions (e.g., computer executable components and instructions) by the system 100 (e.g., the air traffic communication component 102).

The air traffic communication component 102 (e.g., the mesh network component 104 of the air traffic communication component 102) can receive broadcast data (e.g., BROADCAST DATA shown in FIG. 1). The broadcast data can include a set of broadcasts associated with an aircraft surveillance system for one or more aircrafts. For instance, the broadcast data can include a set of broadcasts provided by one or more aircrafts. In an aspect, the set of broadcasts included in the broadcast data can be a set of unidirectional broadcasts provided by one or more aircrafts. In an embodiment, the air traffic communication component 102 can detect the broadcast data via a receiver. In one example, the set of broadcasts included in the broadcast data can be a set of Automatic Dependent Surveillance-Broadcasts associated with satellite navigation. Additionally or alternatively, the set of broadcasts included in the broadcast data can be a set of traffic collision avoidance system broadcasts associated with an aircraft collision avoidance system.

The mesh network component 104 can generate a mesh network of communication datalinks associated with one or more aircrafts based on the broadcast data. With the mesh network of communication datalinks, the one or more aircrafts can be represented as nodes in the mesh network. Furthermore, a set of communication datalinks can connect the one or more aircrafts represented as the nodes in the mesh network. In an aspect, an aircraft in the mesh network can be communicatively coupled to one or more other aircrafts via a set of communication datalinks. The set of communication datalinks of the mesh network can be, for example, a set of high bandwidth connections. For example, the set of communication datalinks can transmit data at a higher bandwidth (e.g., a higher data rate) than the set of broadcasts included in the broadcast data. In another example, the set of communication datalinks of the mesh network can extend a range of communication. In yet another example, the set of communication datalinks of the mesh network can extend a range of higher bandwidth communication to ground. In an embodiment, the set of communication data links can be a set of directional radio connections between the one or more aircrafts. In another embodiment, the set of communication data links can be a set of laser connections between the one or more aircrafts. In certain embodiments, the mesh network component 104 can verify a number of communication connections by the one or more aircrafts to generate the mesh network. For instance, the mesh network component 104 can verify that no duplicate communication connections exist between the one or more aircrafts. In certain embodiments, the aircraft surveillance system associated with the set of broadcasts can be an automatic dependent surveillance-broadcast (ADS-B) system. Furthermore, the mesh network component can determine a location for the one or more aircrafts based on the ADS-B system to facilitate generation of the mesh network of communication datalinks. In an aspect, the ADS-B system can provide global positioning system coordinates and/or inertial navigation system coordinates in a message so that location of the one or more aircrafts can be extracted directly from the message. In certain embodiments, the aircraft surveillance system associated with the set of broadcasts can be a traffic collision avoidance system (TCAS). Furthermore, the mesh network component can determine a location for the one or more aircrafts based on the TCAS system to facilitate generation of the mesh network of communication datalinks. In an aspect, directional antennas associated with the TCAS system can be employed to identify location of another aircraft and altitude information can be extracted from a response from the other aircraft. In certain embodiments, the TCAS system can employ ADS-B for localization associated with the one or more aircrafts.

The traffic management component 106 can augment data provided by an air traffic management system with sensor data received via the mesh network. In an aspect, the traffic management component 106 can augment air traffic data provided by an air traffic management system with sensor data received via the mesh network. Additionally or alternatively, the traffic management component 106 can augment weather data provided by an air traffic management system with sensor data received via the mesh network. Additionally or alternatively, the traffic management component 106 can augment wind data provided by an air traffic management system with sensor data received via the mesh network. Additionally or alternatively, the traffic management component 106 can augment voice data provided by an air traffic management system with sensor data received via the mesh network. In an embodiment, the air traffic management system can be a digital datalink system associated with aircraft communications addressing and reporting. For instance, the traffic management component 106 can receive the air traffic data, the weather data, the wind data, the voice data and/or other data from the digital datalink system associated with aircraft communications addressing and reporting. Additionally or alternatively, the traffic management component 106 can provide the air traffic data, the weather data, the wind data, the voice data and/or other data to the one or more aircrafts via the mesh network associated with the set of high bandwidth connections. In certain embodiments, an aircraft associated with mesh network can act as a relay to relay data (e.g., air traffic data, the weather data, the wind data, the voice data and/or other data) to one or more other aircrafts associated with the mesh network. For instance, aircrafts associated with the mesh network can be configured as nodes of the mesh network to relay data until the data is received by an intended aircraft similar to functionality of a system of interconnected computer networks that employ an Internet protocol.

In another embodiment, traffic management component 106 can receive sensor data associated with the one or more aircrafts, voice data associated with the one or more aircrafts and/or other data associated with the one or more aircrafts via the mesh network associated with the set of high bandwidth connections. In yet another embodiment, the one or more aircrafts can exchange sensor data, voice data, air traffic data, weather data, wind data and/or other data via the mesh network associated with the set of high bandwidth connections. In an aspect, sensor data, voice data, air traffic data, weather data, wind data and/or other data can be included in augmented air traffic data generated by the traffic management component 106 (e.g., AUGMENTED AIR TRAFFIC DATA shown in FIG. 1). The air traffic data can include information regarding surrounding aircrafts such as, for example, altitude of surrounding aircrafts, speed of surrounding aircrafts, flying direction of surrounding aircrafts, distance to surrounding aircrafts, air traffic conditions, etc. Additionally or alternatively, the air traffic data can include information regarding flight information such as, for example, flight route information, navigation information, flight restrictions, and/or other flight information. The weather data can include information regarding weather data from one or more sensors associated with an aircraft, weather reports and/or weather radar. For example, the weather data can include precipitation information, temperature information, cloud cover information, visibility information, barometric pressure information, humidity information, dew point information, wind chill information, ultraviolet index information, air turbulence data, and/or other weather information. The weather data can, for example, be associated with a flight route for the one or more aircrafts. The wind data can include information regarding wind conditions such as, for example, wind speed, wind direction, turbulence and/or other wind data. The wind data can, for example, be associated with a flight route for the one or more aircrafts. The sensor data can include information obtained from one or more sensors associated with the one or more aircrafts and/or one or more geographic locations. For example, the sensor data can include information associated with one or more voltage measurements, one or more temperature measurements, one or more pressure measurements, one or more flow measurements and/or one or more other measurements. Additionally or alternatively, the sensor data can include process data (e.g., process log data), operational data, monitoring data, maintenance data, parameter data, measurement data, performance data and/or other data obtained from a controller device (e.g., a programmable logic controller), a Supervisory Control And Data Acquisition (SCADA) device, a meter device, a monitoring device (e.g., a remote monitoring device), a network-connected device, a user interface device (e.g., a human-machine interface device), a historian device, a computing device, and/or another type of device. The voice data can include audio (e.g., voice audio) generated by the one or more aircrafts (e.g., a pilot of the one or more aircrafts) and/or an air traffic management system. In an embodiment, the traffic management component 106 can repeatedly (e.g., continuously) provide the augmented air traffic data (e.g., sensor data, voice data, air traffic data, weather data, wind data and/or other data) to the mesh network associated with the set of high bandwidth connections. As such, in an embodiment, the one or more aircrafts can repeatedly (e.g., continuously) receive the augmented air traffic data (e.g., sensor data, voice data, air traffic data, weather data, wind data and/or other data) via the mesh network associated with the set of high bandwidth connections. In certain embodiments, an aircraft associated with the mesh network can subscribe to one or more areas of interest (e.g., particular types of data) to, for example, conserve bandwidth.

While FIG. 1 depicts separate components in the air traffic communication component 102, it is to be appreciated that two or more components may be implemented in a common component. Further, it can be appreciated that the design of system 100 and/or the air traffic communication component 102 can include other component selections, component placements, *etc.,* to facilitate airborne mesh network information exchange.

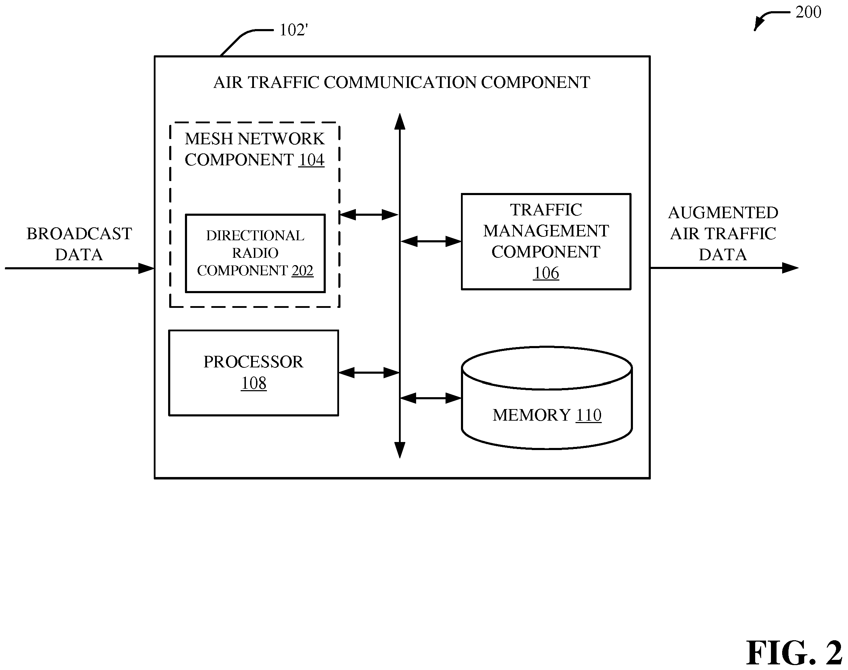

FIG. 2 illustrates a block diagram of an example, non-limiting system 200 in accordance with one or more embodiments described herein. Repetitive description of like elements employed in other embodiments described herein is omitted for sake of brevity.

The system 200 includes an air traffic communication component 102'. The air traffic communication component 102' can be an embodiment of the air traffic communication component 102. In FIG. 2, the air traffic management component 102' includes the mesh network component 104, the traffic management component 106, the processor 108 and/or the memory 110. The mesh network component 104 can include a directional radio component 202. The directional radio component 202 can be employed to establish the set of communication datalinks for the mesh network. In an aspect, the directional radio component 202 can establish a set of directional radio connections between the one or more aircrafts. The set of directional radio connections can transmit data at a higher bandwidth (e.g., a higher data rate) than the set of broadcasts included in the broadcast data. In certain embodiments, the directional radio component 202 can establish a set of microwave links between the one or more aircrafts. In an embodiment, the directional radio component 202 can employ a mechanically scanned antenna (e.g., a mechanically scanned directional antenna) to establish the set of directional radio connections between the one or more aircrafts. The mechanically scanned antenna can be mechanically moved to create a beam of radio waves (e.g., the set of directional radio connections) in a desired direction. In another embodiment, the directional radio component 202 can employ an active electronically scanned antenna to establish the set of directional radio connections between the one or more aircrafts. The active electronically scanned antenna can be a computer-controlled phased array antenna that electronically alters a direction for transmitting a beam of radio waves (e.g., the set of directional radio connections) in a desired direction without mechanically moving the active electronically scanned antenna. Furthermore, antenna components of the active electronically scanned antenna can include a separate transmitter and/or a separate receiver. In yet another embodiment, the directional radio component 202 can employ passive electronically scanned antenna to establish the set of directional radio connections between the one or more aircrafts. The passive electronically scanned antenna can be a computer-controlled phased array antenna that electronically alters a direction for transmitting a beam of radio waves (e.g., the set of directional radio connections) in a desired direction without mechanically moving the passive electronically scanned antenna. Furthermore, the passive electronically scanned antenna can include a single transmitter and/or a single receiver shared between antenna components of the passive electronically scanned antenna.

While FIG. 2 depicts separate components in the air traffic communication component 102', it is to be appreciated that two or more components may be implemented in a common component. Further, it can be appreciated that the design of system 200 and/or the air traffic communication component 102' can include other component selections, component placements, *etc.,* to facilitate airborne mesh network information exchange.

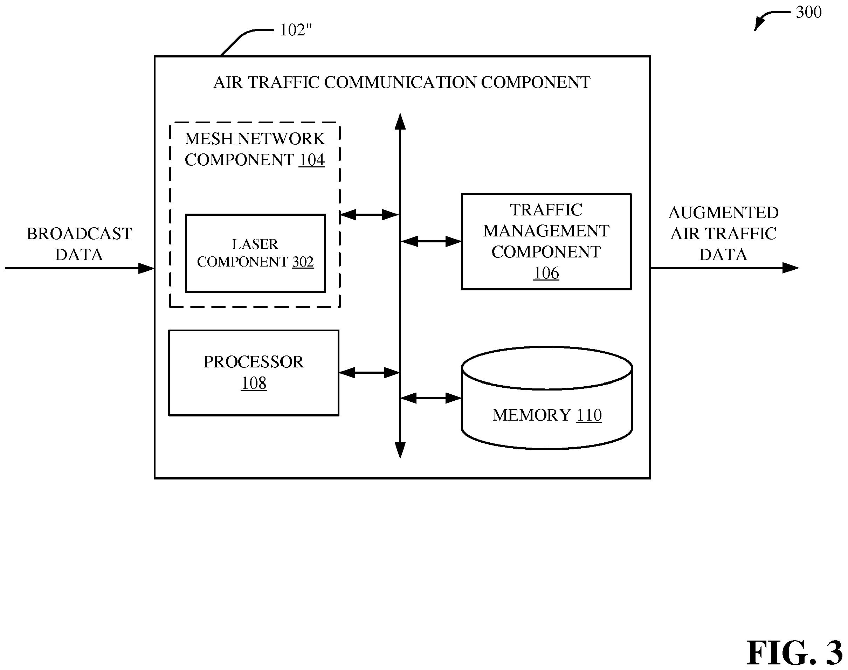

FIG. 3 illustrates a block diagram of an example, non-limiting system 300 in accordance with one or more embodiments described herein. Repetitive description of like elements employed in other embodiments described herein is omitted for sake of brevity.

The system 200 includes an air traffic communication component 102". The air traffic communication component 102" can be an embodiment of the air traffic communication component 102. In FIG. 2, the air traffic management component 102" includes the mesh network component 104, the traffic management component 106, the processor 108 and/or the memory 110. The mesh network component 104 can include a laser component 302. The laser component 302 can be employed to establish the set of communication datalinks for the mesh network. In an aspect, the laser component 302 can establish a set of laser connections between the one or more aircrafts. The set of laser connections can transmit data at a higher bandwidth (e.g., a higher data rate) than the set of broadcasts included in the broadcast data. The set of laser connections can be a set of optical communication channels that employ lasers to transmit data. For instance, the set of laser connections can be a set of wireless optical laser links. In an embodiment, laser component 302 can employ a receptor and/or a transmitter to facilitate establishing the set of laser connections between the one or more aircrafts. In an aspect, the set of laser connections can be associated with infrared laser light to facilitate wireless optical transmission of data.

While FIG. 3 depicts separate components in the air traffic communication component 102", it is to be appreciated that two or more components may be implemented in a common component. Further, it can be appreciated that the design of system 300 and/or the air traffic communication component 102" can include other component selections, component placements, *etc.,* to facilitate airborne mesh network information exchange.

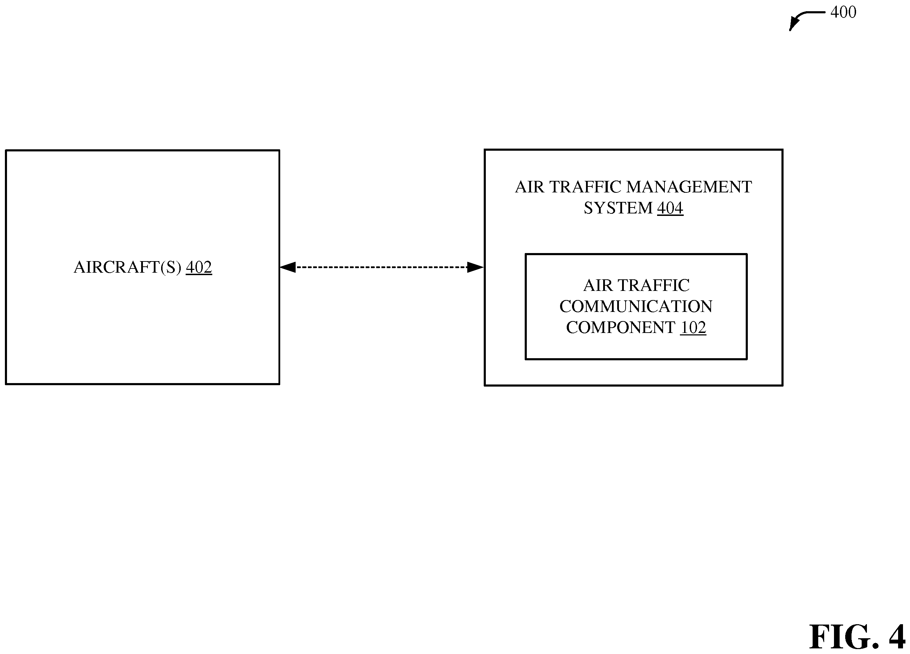

FIG. 4 illustrates a block diagram of an example, non-limiting system 400 in accordance with one or more embodiments described herein. Repetitive description of like elements employed in other embodiments described herein is omitted for sake of brevity.

The system 400 includes one or more aircrafts 402 and an air traffic management system 404. The air traffic management system 404 can include the air traffic communication component 102. In an embodiment, the air traffic communication component 102 can correspond to the air traffic communication component 102'. In another embodiment, the air traffic communication component 102 can correspond to the air traffic communication component 102". An aircraft from the one or more aircrafts 402 can be an airplane, a helicopter, a jet aircraft, an airship, an unmanned aerial vehicle or another machine capable of flying through the air. The air traffic management system 404 can be a system that manages flight of the one or more aircrafts 402 for a defined area. For instance, the air traffic management system 404 can manage departure of the one or more aircrafts 402, navigation of the one or more aircrafts 402 during a flight route, and/or landing of the one or more aircrafts 402. In an embodiment, the one or more aircrafts 402 can be associated with the broadcast data received by the air traffic communication component 102. For instance, the air traffic communication component 102 of the air traffic management system 404 can detect the broadcast data associated with the or more aircrafts 402 (e.g., the set of broadcasts broadcasted by the one or more aircrafts 402) in a certain area surrounding the air traffic management system 404. In certain embodiments, the one or more aircrafts 402 and/or the air traffic management system 404 can include an ADS-B system. Furthermore, the air traffic communication component 102 of the air traffic management system 404 can determine a location of the one or more aircrafts 402 based on the ADS-B system of the one or more aircrafts 402 and/or the air traffic management system 404. For instance, the air traffic communication component 102 of the air traffic management system 404 can determine a location of the one or more aircrafts 402 based on satellite surveillance associated with the ADS-B system of the one or more aircrafts 402 and/or the air traffic management system 404. Additionally or alternatively, in certain embodiments, the one or more aircrafts 402 and/or the air traffic management system 404 can include a TCAS system. Furthermore, the air traffic communication component 102 of the air traffic management system 404 can determine a location of the one or more aircrafts 402 based on the TCAS system of the one or more aircrafts 402 and/or the air traffic management system 404. For instance, the air traffic communication component 102 of the air traffic management system 404 can determine a location of the one or more aircrafts 402 based on radar transponder signals associated with the TCAS system of the one or more aircrafts 402 and/or the air traffic management system 404. Additionally, based on the determined location of the one or more aircrafts 402, the air traffic communication component 102 of the air traffic management system 404 can establish a set of high bandwidth connections with the one or more aircrafts 402. For example, based on the determined location of the one or more aircrafts 402, the air traffic communication component 102 of the air traffic management system 404 can establish a set of directional radio connections between the one or more aircrafts 402 and/or the air traffic management system 404 (e.g., the air traffic communication component 102 of the air traffic management system 404). In another example, based on the determined location of the one or more aircrafts 402, the air traffic communication component 102 of the air traffic management system 404 can establish a set of radar connections between the one or more aircrafts 402 and/or the air traffic management system 404 (e.g., the air traffic communication component 102 of the air traffic management system 404). In an aspect, the one or more aircrafts 402 can provide data to the air traffic management system 404 (e.g., the air traffic communication component 102 of the air traffic management system 404) based on the set of high bandwidth connections. Additionally or alternatively, the air traffic management system 404 (e.g., the air traffic communication component 102 of the air traffic management system 404) can provide data to the one or more aircrafts 402 based on the set of high bandwidth connections. Additionally or alternatively, data can be exchanged between the one or more aircrafts 402 based on the set of high bandwidth connections. For example, the one or more aircrafts 402 can provide sensor data associated with the one or more aircrafts 402, voice data associated with the one or more aircrafts 402, and/or other data associated with the one or more aircrafts 402 to the air traffic management system 404 (e.g., the air traffic communication component 102 of the air traffic management system 404) based on the set of high bandwidth connections. Additionally or alternatively, the air traffic management system 404 (e.g., the air traffic communication component 102 of the air traffic management system 404) can provide air traffic data, weather data, wind data, voice data and/or other data to the one or more aircrafts 402 based on the set of high bandwidth connections. Additionally or alternatively, sensor data, air traffic data, weather data, wind data, voice data and/or other data can be exchanged between the one or more aircrafts 402 based on the set of high bandwidth connections.

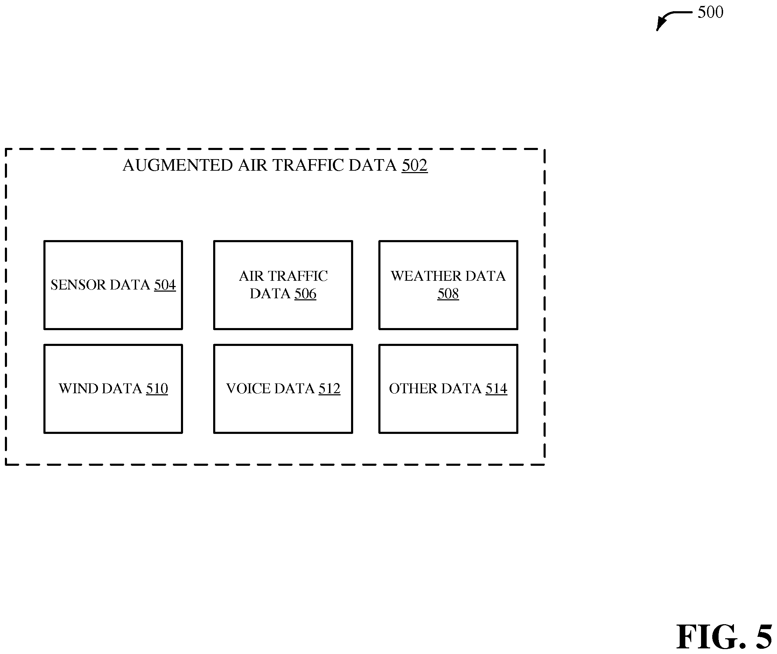

FIG. 5 illustrates a block diagram of an example, non-limiting system 500 in accordance with one or more embodiments described herein. Repetitive description of like elements employed in other embodiments described herein is omitted for sake of brevity.

The system 500 includes augmented air traffic data 502. The augmented air traffic data 502 can be augmented air traffic data generated by the air traffic communication component 102. For example, the augmented air traffic data 502 can be data exchanged via a mesh network of communication datalinks (e.g., a mesh network that includes a set of high bandwidth connections) between one or more aircrafts (e.g., the one or more aircrafts 402) and the air traffic communication component 102 (e.g., the air traffic management system 404 that includes the air traffic communication component 102). The augmented air traffic data 502 can include sensor data 504, air traffic data 506, weather data 508, wind data 510, voice data 512 and/or other data 514. The sensor data 504 can include information obtained from one or more sensors associated with the one or more aircrafts (e.g., the one or more aircrafts 402) and/or one or more geographic locations. For example, the sensor data 504 can include information associated with one or more voltage measurements, one or more temperature measurements, one or more pressure measurements, one or more flow measurements and/or one or more other measurements. Additionally or alternatively, the sensor data 504 can include process data (e.g., process log data), operational data, monitoring data, maintenance data, parameter data, measurement data, performance data and/or other data obtained from a controller device (e.g., a programmable logic controller), a SCADA device, a meter device, a monitoring device (e.g., a remote monitoring device), a network-connected device, a user interface device (e.g., a human-machine interface device), a historian device, a computing device, and/or another type of device associated with the one or more aircrafts (e.g., the one or more aircrafts 402) and/or one or more geographic locations.

The air traffic data 506 can include information regarding surrounding aircrafts with respect to the one or more aircrafts (e.g., the one or more aircrafts 402) such as, for example, altitude of surrounding aircrafts, speed of surrounding aircrafts, flying direction of surrounding aircrafts, distance to surrounding aircrafts, air traffic conditions, etc. Additionally or alternatively, the air traffic data 506 can include information regarding flight information such as, for example, flight route information, navigation information, flight restrictions, and/or other flight information. The weather data 508 can include information regarding weather data from one or more sensors associated with an aircraft, weather reports and/or weather radar. For example, the weather data 508 can include precipitation information, temperature information, cloud cover information, visibility information, barometric pressure information, humidity information, dew point information, wind chill information, ultraviolet index information, air turbulence data, and/or other weather information. The weather data 508 can, for example, be associated with a flight route for the one or more aircrafts (e.g., the one or more aircrafts 402). The wind data 510 can include information regarding wind conditions such as, for example, wind speed, wind direction, turbulence and/or other wind data. The wind data 510 can, for example, be associated with a flight route for the one or more aircrafts (e.g., the one or more aircrafts 402). The voice data 512 can include audio (e.g., voice audio) generated by the one or more aircrafts (e.g., a pilot of the one or more aircrafts 402) and/or an air traffic management system (e.g., the air traffic management system 404). The other data 514 can include other information associated with the one or more aircrafts (e.g., the one or more aircrafts 402) and/or an air traffic management system (e.g., the air traffic management system 404).

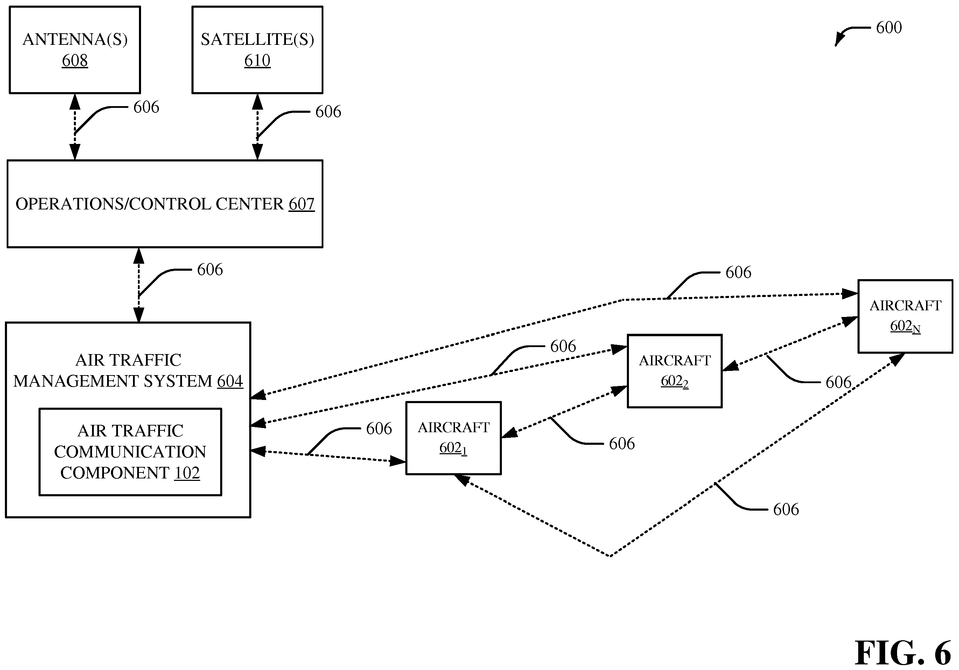

FIG. 6 illustrates a block diagram of an example, non-limiting system 600 in accordance with one or more embodiments described herein. Repetitive description of like elements employed in other embodiments described herein is omitted for sake of brevity.

The system 600 includes a set of aircrafts 602_{1-N} where N is an integer. The system 600 also includes an air traffic management system 604. The set of aircrafts 602_{1-N} can, for example, correspond to the one or more aircrafts 402. Furthermore, the air traffic management system 604 can, for example, correspond to the air traffic management system 404. The air traffic management system 604 can include the air traffic communication component 102. In an embodiment, the air traffic communication component 102 can correspond to the air traffic communication component 102'. In another embodiment, the air traffic communication component 102 can correspond to the air traffic communication component 102". An aircraft from the set of aircrafts 602_{1-N} can be an airplane, a helicopter, a jet aircraft, an airship, an unmanned aerial vehicle or another machine capable of flying through the air. The air traffic management system 604 can be a system that manages flight of the set of aircrafts 602_{1-N} for a defined area. For instance, air traffic management system 604 can manage departure of the set of aircrafts 602_{1-N}, navigation of the set of aircrafts 602_{1-N} during a flight route, and/or landing of the set of aircrafts 602_{1-N}. In an embodiment, the set of aircrafts 602_{1-N} and/or the air traffic management system 604 (e.g., the air traffic communication component 102 of the air traffic management system 604) can be in communication via a mesh network that includes a set of communication datalinks 606. In an aspect, the set of communication datalinks 606 can be a set of high bandwidth connections associated with the set of aircrafts 602_{1-N} and/or the air traffic management system 604 (e.g., the air traffic communication component 102 of the air traffic management system 604). For example, set of communication datalinks 606 can transmit data at a higher bandwidth (e.g., a higher data rate) than a set of broadcasts employed to determine a location of the the set of aircrafts 602_{1-N}. In an embodiment, the set of communication datalinks 606 can be a set of directional radio connections between the set of aircrafts 602_{1-N} and/or the air traffic management system 604 (e.g., the air traffic communication component 102 of the air traffic management system 604). In another embodiment, the set of communication datalinks 606 can be a set of radar connections between the set of aircrafts 602_{1-N} and/or the air traffic management system 604 (e.g., the air traffic communication component 102 of the air traffic management system 604). In an aspect, the set of aircrafts 602_{1-N} can provide data to the air traffic management system 604 (e.g., the air traffic communication component 102 of the air traffic management system 604) based on the set of communication datalinks 606. Additionally or alternatively, the air traffic management system 604 (e.g., the air traffic communication component 102 of the air traffic management system 604) can provide data to the set of aircrafts 602_{1-N} based on the set of communication datalinks 606. Additionally or alternatively, data can be exchanged between the set of aircrafts 602_{1-N} based on the set of communication datalinks 606. For example, the set of aircrafts 602_{1-N} can provide sensor data associated with the set of aircrafts 602_{1-N}, voice data associated with the set of aircrafts 602_{1-N}, and/or other data associated with the set of aircrafts 602_{1-N} to the air traffic management system 604 (e.g., the air traffic communication component 102 of the air traffic management system 604) based on the set of communication datalinks 606. Additionally or alternatively, the air traffic management system 604 (e.g., the air traffic communication component 102 of the air traffic management system 604) can provide air traffic data, weather data, wind data, voice data and/or other data to the set of aircrafts 602_{1-N} based on the set of communication datalinks 606. Additionally or alternatively, sensor data, air traffic data, weather data, wind data, voice data and/or other data can be exchanged between the set of aircrafts 602_{1-N} based on the set of communication datalinks 606. It is to be appreciated that, in certain embodiments, one or more ground antennas, one or more satellites, one or more Airline Operations Centers, Air Traffic Management/Air Traffic Control, and/or another type of communication device can be additionally included in the system 600. For instance, one or more ground antennas, one or more satellites, one or more Airline Operations Centers, Air Traffic Management/Air Traffic Control, and/or another type of communication device can additionally be in communication with the air traffic management system 604 (e.g., the air traffic communication component 102 of the air traffic management system 604) and/or the set of aircrafts 602_{1-N} via the set of communication datalinks 606. Furthermore, in certain embodiments, the air traffic management system 604 can include one or more ground antennas, one or more satellites, one or more Airline Operations Centers, Air Traffic Management/Air Traffic Control, and/or another type of communication device. In an example embodiment, the system 600 can additionally include an operations/control center 607. The operations/control center 607 can be an Airline Operations Center, an Air Traffic Control Center, and/or a Traffic Management Center. The operations/control center 607 can be communicatively coupled to one or more antennas 608 and/or one or more satellites 610 via the set of communication datalinks 606. As such, at least a portion of data communicated via the set of communication datalinks 606 can be generated by the one or more antennas 608 and/or the one or more satellites 610. In certain embodiments, the air traffic management system 604 (e.g., the air traffic communication component 102 of the air traffic management system 604) can determine a location of the one or more antennas 608 based on location data included in a database to facilitate generation of at least a portion of the set of communication datalinks 606. In one example, the air traffic management system 604 (e.g., the air traffic communication component 102 of the air traffic management system 604) can aim a directional antenna beam, a laser beam and/or a microwave beam at the one or more antennas 608 based on the location data included in the database. The operations/control center 607 can additionally be communicatively coupled to the air traffic management system 604 and/or the set of aircrafts 602_{1-N} via the set of communication datalinks 606. In an embodiment, the operations/control center 607 can be included in the air traffic management system 604. In another embodiment, the operations/control center 607 can be implemented separate from the air traffic management system 604. In an embodiment, the air traffic management system 604 (e.g., the air traffic communication component 102 of the air traffic management system 604) can be implemented separate from at least one aircraft from the set of aircrafts 602_{1-N}. In one example, the air traffic management system 604 (e.g., the air traffic communication component 102 of the air traffic management system 604) can be implemented in a device separate from the set of aircrafts 602_{1-N}. In another embodiment, one or more aircrafts from the set of aircrafts 602_{1-N} can include the air traffic management system 604 (e.g., the air traffic communication component 102 of the air traffic management system 604).

The aforementioned systems and/or devices have been described with respect to interaction between several components. It should be appreciated that such systems and components can include those components or sub-components specified therein, some of the specified components or sub-components, and/or additional components. Sub-components could also be implemented as components communicatively coupled to other components rather than included within parent components. Further yet, one or more components and/or sub-components may be combined into a single component providing aggregate functionality. The components may also interact with one or more other components not specifically described herein for the sake of brevity, but known by those of skill in the art.

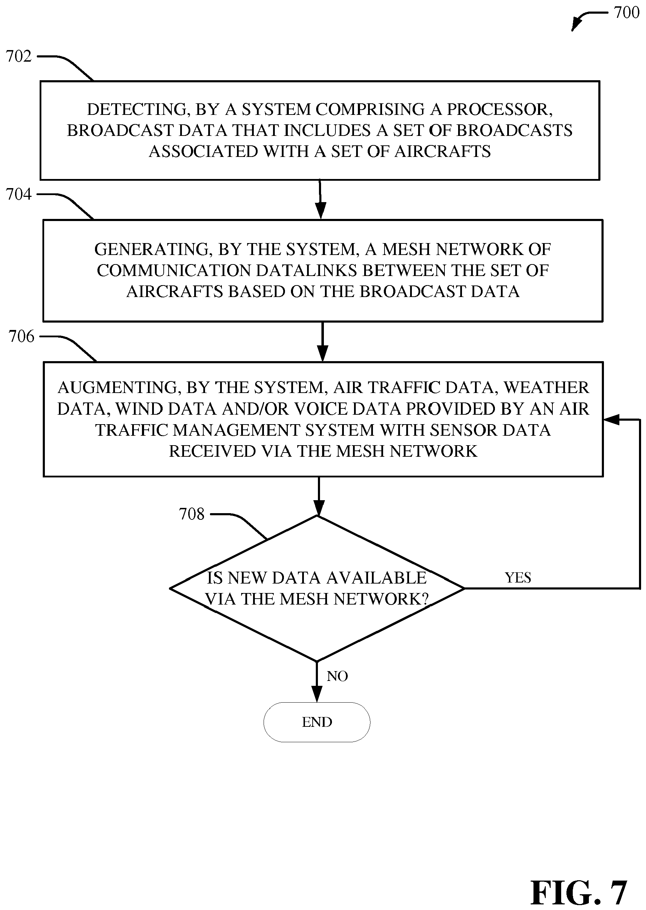

Figures 7-8 illustrate methodologies and/or flow diagrams in accordance with the disclosed subject matter. For simplicity of explanation, the methodologies are depicted and described as a series of acts. It is to be understood and appreciated that the subject innovation is not limited by the acts illustrated and/or by the order of acts, for example acts can occur in various orders and/or concurrently, and with other acts not presented and described herein. Furthermore, not all illustrated acts may be required to implement the methodologies in accordance with the disclosed subject matter. In addition, those skilled in the art will understand and appreciate that the methodologies could alternatively be represented as a series of interrelated states *via* a state diagram or events. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device or storage media.

Referring to FIG. 7, there illustrated is a methodology 700 for facilitating airborne mesh network information exchange, in accordance with one or more embodiments described herein. As an example, the methodology 700 can be utilized in various applications, such as, but not limited to, aviation systems, control systems, control and interface systems, aircraft traffic management systems, navigation control systems, controller-pilot data link communication systems, vehicle systems, transportation systems, etc. At 702, broadcast data that includes a set of broadcasts associated with a set of aircrafts is detected, by a system comprising a processor (e.g., by mesh network component 104). For instance, the broadcast data can include a set of broadcasts provided by the one or more aircrafts. In an aspect, the set of broadcasts included in the broadcast data can be a set of unidirectional broadcasts provided by the one or more aircrafts. In an embodiment, the broadcast data can be detected via a receiver. In one example, the set of broadcasts included in the broadcast data can be a set of Automatic Dependent Surveillance-Broadcasts associated with satellite navigation. Additionally or alternatively, the set of broadcasts included in the broadcast data can be a set of traffic collision avoidance system broadcasts associated with an aircraft collision avoidance system. An aircraft from the one or more aircrafts can be an airplane, a helicopter, a jet aircraft, an airship, an unmanned aerial vehicle or another machine capable of flying through the air. In certain embodiments, the detecting the broadcast data can include detecting the broadcast data via an automatic dependent surveillance-broadcast system. In certain embodiments, the detecting the broadcast data comprises detecting the broadcast data via a traffic collision avoidance system.

At 704, a mesh network of communication datalinks between the set of aircrafts is generated, by the system (e.g., by mesh network component 104), based on the broadcast data. For instance, with the mesh network of communication datalinks, the one or more aircrafts can be represented as nodes in the mesh network. Furthermore, the communication datalinks can connect the one or more aircrafts represented as the nodes in the mesh network. In an aspect, an aircraft in the mesh network can be communicatively coupled to one or more other aircrafts via the mesh network of communication datalinks. The communication datalinks of the mesh network can be, for example, a set of high bandwidth connections. For example, the communication datalinks of the mesh network can transmit data at a higher bandwidth (e.g., a higher data rate) than the set of broadcasts included in the broadcast data. In an embodiment, the communication data links of the mesh network can be a set of directional radio connections between the one or more aircrafts. In another embodiment, the communication data links of the mesh network can be a set of laser connections between the one or more aircrafts. In certain embodiments, the generating the mesh network can include verifying a number of communication connections associated with the set of aircrafts.

At 706, air traffic data, weather data, wind data and/or voice data provided by an air traffic management system is augmented, by the system (e.g., by traffic management component 106), with sensor data received via the mesh network. For example, air traffic data, weather data, wind data, voice data and/or other data can be exchanged via the mesh network of communication datalinks. The sensor data can include information obtained from one or more sensors associated with the one or more aircrafts and/or one or more geographic locations. For example, the sensor data can include information associated with one or more voltage measurements, one or more temperature measurements, one or more pressure measurements, one or more flow measurements and/or one or more other measurements. Additionally or alternatively, the sensor data can include process data (e.g., process log data), operational data, monitoring data, maintenance data, parameter data, measurement data, performance data and/or other data obtained from a controller device (e.g., a programmable logic controller), a SCADA device, a meter device, a monitoring device (e.g., a remote monitoring device), a network-connected device, a user interface device (e.g., a human-machine interface device), a historian device, a computing device, and/or another type of device associated with the one or more aircrafts and/or one or more geographic locations. The air traffic data can include information regarding surrounding aircrafts with respect to the one or more aircrafts such as, for example, altitude of surrounding aircrafts, speed of surrounding aircrafts, flying direction of surrounding aircrafts, distance to surrounding aircrafts, air traffic conditions, etc. Additionally or alternatively, the air traffic data can include information regarding flight information such as, for example, flight route information, navigation information, flight restrictions, and/or other flight information. The weather data can include information regarding weather data from one or more sensors associated with an aircraft, weather reports and/or weather radar. For example, the weather data can include precipitation information, temperature information, cloud cover information, visibility information, barometric pressure information, humidity information, dew point information, wind chill information, ultraviolet index information, air turbulence data, and/or other weather information. The weather data can, for example, be associated with a flight route for the one or more aircrafts. The wind data can include information regarding wind conditions such as, for example, wind speed, wind direction, turbulence and/or other wind data. The wind data can, for example, be associated with a flight route for the one or more aircrafts. The voice data can include audio (e.g., voice audio) generated by the one or more aircrafts and/or an air traffic management system. In certain embodiments, other data can additionally or alternatively be exchanged via the mesh network of communication datalinks. The other data can include other information associated with the one or more aircrafts and/or an air traffic management system. In certain embodiments, air traffic data, weather data, wind data, voice data and/or other data can be received from a digital datalink system associated with aircraft communications addressing and reporting.

At 708, it is determined whether new data is available via the mesh network. If yes, the methodology 700 returns to 706. If no, the methodology 700 can end.

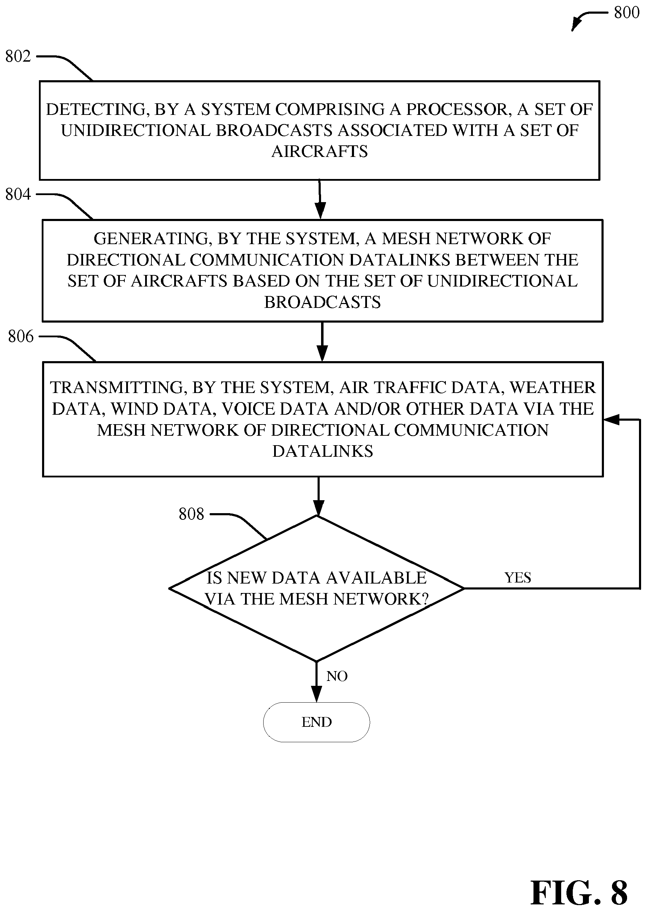

Referring to FIG. 8, there illustrated is a methodology 800 for facilitating airborne mesh network information exchange, in accordance with one or more embodiments described herein. As an example, the methodology 800 can be utilized in various applications, such as, but not limited to, aviation systems, control systems, control and interface systems, aircraft traffic management systems, navigation control systems, controller-pilot data link communication systems, vehicle systems, transportation systems, etc. At 802, a set of unidirectional broadcasts associated with a set of aircrafts is detected, by a system comprising a processor (e.g., by mesh network component 104). For instance, the set of unidirectional broadcasts can be provided by the one or more aircrafts. The set of unidirectional broadcasts can be broadcasted in multiple directions. In an embodiment, the set of unidirectional broadcasts can be detected via a receiver. In one example, the set of unidirectional broadcasts can be a set of Automatic Dependent Surveillance-Broadcasts associated with satellite navigation. Additionally or alternatively, the set of unidirectional broadcasts can be a set of traffic collision avoidance system broadcasts associated with an aircraft collision avoidance system. An aircraft from the one or more aircrafts can be an airplane, a helicopter, a jet aircraft, an airship, an unmanned aerial vehicle or another machine capable of flying through the air. In certain embodiments, the detecting the set of unidirectional broadcasts can include detecting the set of unidirectional broadcasts via an automatic dependent surveillance-broadcast system. In certain embodiments, the detecting the set of unidirectional broadcasts can include detecting the set of unidirectional broadcasts via a traffic collision avoidance system.

At 804, a mesh network of directional communication datalinks between the set of aircrafts is generated, by the system (e.g., by mesh network component 104), based on the set of unidirectional broadcasts. For instance, with the mesh network of directional communication datalinks, the one or more aircrafts can be represented as nodes in the mesh network. Furthermore, the directional communication datalinks can connect the one or more aircrafts represented as the nodes in the mesh network. The directional communication datalinks can be broadcasted in a single direction. In an aspect, an aircraft in the mesh network can be communicatively coupled to one or more other aircrafts via the mesh network of directional communication datalinks. The directional communication datalinks of the mesh network can be, for example, a set of high bandwidth directional connections. For example, the directional communication datalinks of the mesh network can transmit data at a higher bandwidth (e.g., a higher data rate) than the set of unidirectional broadcasts. In an embodiment, the directional communication data links of the mesh network can be a set of directional radio connections between the one or more aircrafts. In another embodiment, the directional communication datalinks of the mesh network can be a set of laser connections between the one or more aircrafts. In certain embodiments, the generating the mesh network can include verifying a number of communication connections associated with the set of aircrafts.

At 806, air traffic data, weather data, wind data, voice data and/or other data is transmitted, by the system (e.g., by traffic management component 106), via the mesh network of directional communication datalinks. For example, air traffic data, weather data, wind data, voice data and/or other data can be exchanged via the mesh network of directional communication datalinks. The sensor data can include information obtained from one or more sensors associated with the one or more aircrafts and/or one or more geographic locations. For example, the sensor data can include information associated with one or more voltage measurements, one or more temperature measurements, one or more pressure measurements, one or more flow measurements and/or one or more other measurements. Additionally or alternatively, the sensor data can include process data (e.g., process log data), operational data, monitoring data, maintenance data, parameter data, measurement data, performance data and/or other data obtained from a controller device (e.g., a programmable logic controller), a SCADA device, a meter device, a monitoring device (e.g., a remote monitoring device), a network-connected device, a user interface device (e.g., a human-machine interface device), a historian device, a computing device, and/or another type of device associated with the one or more aircrafts and/or one or more geographic locations. The air traffic data can include information regarding surrounding aircrafts with respect to the one or more aircrafts such as, for example, altitude of surrounding aircrafts, speed of surrounding aircrafts, flying direction of surrounding aircrafts, distance to surrounding aircrafts, air traffic conditions, etc. Additionally or alternatively, the air traffic data can include information regarding flight information such as, for example, flight route information, navigation information, flight restrictions, and/or other flight information. The weather data can include information regarding weather data from one or more sensors associated with an aircraft, weather reports and/or weather radar. For example, the weather data can include precipitation information, temperature information, cloud cover information, visibility information, barometric pressure information, humidity information, dew point information, wind chill information, ultraviolet index information, air turbulence data, and/or other weather information. The weather data can, for example, be associated with a flight route for the one or more aircrafts. The wind data can include information regarding wind conditions such as, for example, wind speed, wind direction, turbulence and/or other wind data. The wind data can, for example, be associated with a flight route for the one or more aircrafts. The voice data can include audio (e.g., voice audio) generated by the one or more aircrafts and/or an air traffic management system. In certain embodiments, other data can additionally or alternatively be exchanged via the mesh network of directional communication datalinks. The other data can include other information associated with the one or more aircrafts and/or an air traffic management system. In certain embodiments, air traffic data, weather data, wind data, voice data and/or other data can be received from a digital datalink system associated with aircraft communications addressing and reporting.

At 808, it is determined whether new data is available via the mesh network. If yes, the methodology 800 returns to 806. If no, the methodology 800 can end.

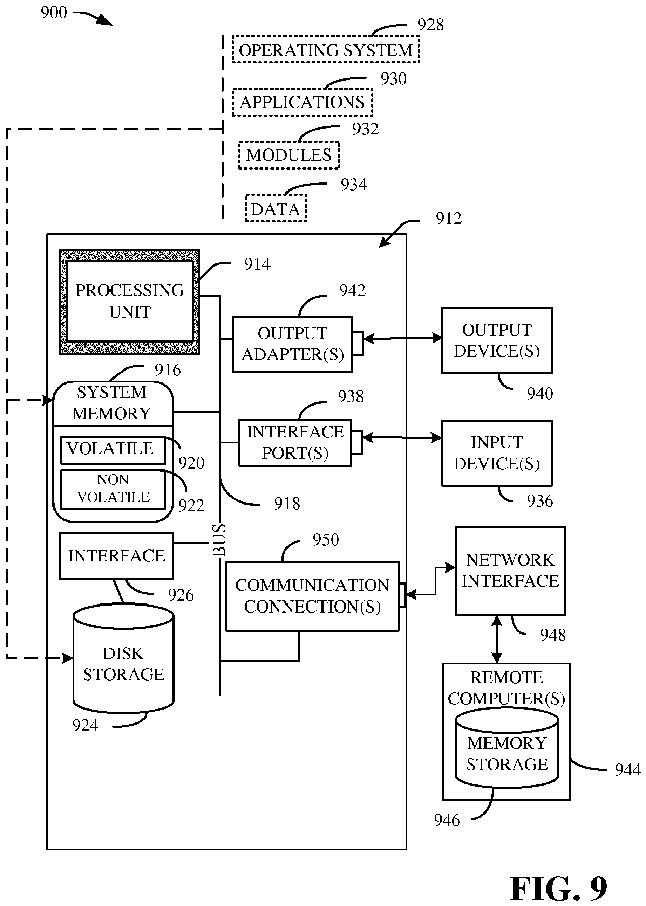

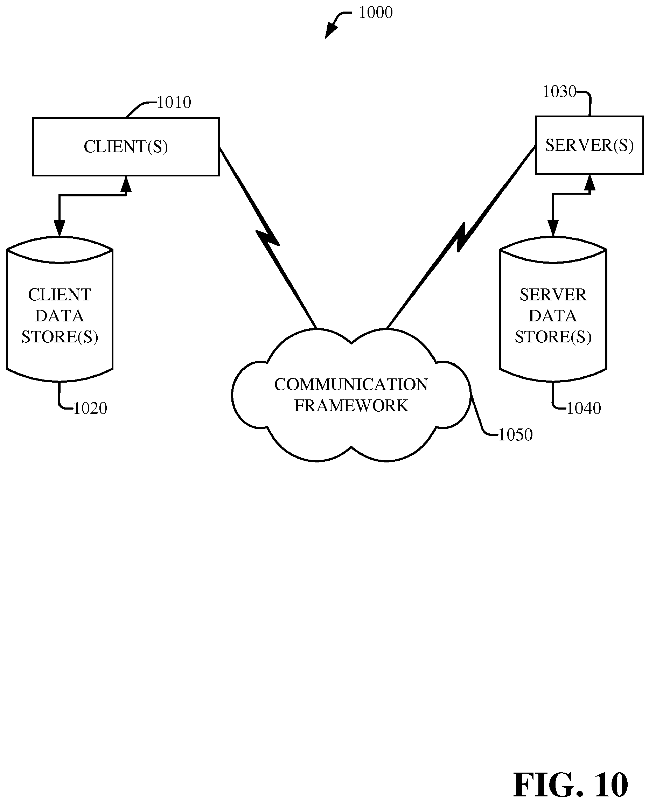

In order to provide a context for the various aspects of the disclosed subject matter, FIGS. 9 and 10 as well as the following discussion are intended to provide a brief, general description of a suitable environment in which the various aspects of the disclosed subject matter may be implemented.

With reference to FIG. 9, a suitable environment 900 for implementing various aspects of this disclosure includes a computer 912. The computer 912 includes a processing unit 914, a system memory 916, and a system bus 918. The system bus 918 couples system components including, but not limited to, the system memory 916 to the processing unit 914. The processing unit 914 can be any of various available processors. Dual microprocessors and other multiprocessor architectures also can be employed as the processing unit 914.

The system bus 918 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 916 includes volatile memory 920 and nonvolatile memory 922. The basic input/output system (BIOS), containing the basic routines to transfer information between elements within the computer 912, such as during start-up, is stored in nonvolatile memory 922. By way of illustration, and not limitation, nonvolatile memory 922 can include read only memory (ROM), programmable ROM (PROM), electrically programmable ROM (EPROM), electrically erasable programmable ROM (EEPROM), flash memory, or nonvolatile random access memory (RAM) (e.g., ferroelectric RAM (FeRAM). Volatile memory 920 includes random access memory (RAM), which acts as external cache memory. By way of illustration and not limitation, RAM is available in many forms such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM.

Computer 912 also includes removable/non-removable, volatile/non-volatile computer storage media. FIG. 9 illustrates, for example, a disk storage 924. Disk storage 924 includes, but is not limited to, devices like a magnetic disk drive, floppy disk drive, tape drive, Jaz drive, Zip drive, LS-100 drive, flash memory card, or memory stick. The disk storage 924 also can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 924 to the system bus 918, a removable or non-removable interface is typically used, such as interface 926.

FIG. 9 also depicts software that acts as an intermediary between users and the basic computer resources described in the suitable operating environment 900. Such software includes, for example, an operating system 928. Operating system 928, which can be stored on disk storage 924, acts to control and allocate resources of the computer system 912. System applications 930 take advantage of the management of resources by operating system 928 through program modules 932 and program data 934, e.g., stored either in system memory 916 or on disk storage 924. It is to be appreciated that this disclosure can be implemented with various operating systems or combinations of operating systems.

A user enters commands or information into the computer 912 through input device(s) 936. Input devices 936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 914 through the system bus 918 via interface port(s) 938. Interface port(s) 938 include, for example, a serial port, a parallel port, a game port, and a universal serial bus (USB). Output device(s) 940 use some of the same type of ports as input device(s) 936. Thus, for example, a USB port may be used to provide input to computer 912, and to output information from computer 912 to an output device 940. Output adapter 942 is provided to illustrate that there are some output devices 940 like monitors, speakers, and printers, among other output devices 940, which require special adapters. The output adapters 942 include, by way of illustration and not limitation, video and sound cards that provide a means of connection between the output device 940 and the system bus 918. It should be noted that other devices and/or systems of devices provide both input and output capabilities such as remote computer(s) 944.

Computer 912 can operate in a networked environment using logical connections to one or more remote computers, such as remote computer(s) 944. The remote computer(s) 944 can be a personal computer, a server, a router, a network PC, a workstation, a microprocessor based appliance, a peer device or other common network node and the like, and typically includes many or all of the elements described relative to computer 912. For purposes of brevity, only a memory storage device 946 is illustrated with remote computer(s) 944. Remote computer(s) 944 is logically connected to computer 912 through a network interface 948 and then physically connected via communication connection 950. Network interface 948 encompasses wire and/or wireless communication networks such as local-area networks (LAN), wide-area networks (WAN), cellular networks, etc. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 950 refers to the hardware/software employed to connect the network interface 948 to the bus 918. While communication connection 950 is shown for illustrative clarity inside computer 912, it can also be external to computer 912. The hardware/software necessary for connection to the network interface 948 includes, for exemplary purposes only, internal and external technologies such as, modems including regular telephone grade modems, cable modems and DSL modems, ISDN adapters, and Ethernet cards.

FIG. 10 is a schematic block diagram of a sample-computing environment 1000 with which the subject matter of this disclosure can interact. The sample-computing environment 1000 includes one or more client(s) 1010. The client(s) 1010 can be hardware and/or software (e.g., threads, processes, computing devices). The sample-computing environment 1000 also includes one or more server(s) 1030. Thus, sample-computing environment 1000 can correspond to a two-tier client server model or a multi-tier model (e.g., client, middle tier server, data server), amongst other models. The server(s) 1030 can also be hardware and/or software (e.g., threads, processes, computing devices). The servers 1030 can house threads to perform transformations by employing this disclosure, for example. One possible communication between a client 1010 and a server 1030 may be in the form of a data packet transmitted between two or more computer processes.

The sample-computing environment 1000 includes a communication framework 1050 that can be employed to facilitate communications between the client(s) 1010 and the server(s) 1030. The client(s) 1010 are operatively connected to one or more client data store(s) 1020 that can be employed to store information local to the client(s) 1010. Similarly, the server(s) 1030 are operatively connected to one or more server data store(s) 1040 that can be employed to store information local to the servers 1030. It is to be noted that aspects or features of this disclosure can be exploited in substantially any wireless telecommunication or radio technology, e.g., Wi-Fi; Bluetooth; Worldwide Interoperability for Microwave Access (WiMAX); Enhanced General Packet Radio Service (Enhanced GPRS); Third Generation Partnership Project (3GPP) Long Term Evolution (LTE); Third Generation Partnership Project 2 (3GPP2) Ultra Mobile Broadband (UMB); 3GPP Universal Mobile Telecommunication System (UMTS); High Speed Packet Access (HSPA); High Speed Downlink Packet Access (HSDPA); High Speed Uplink Packet Access (HSUPA); GSM (Global System for Mobile Communications) EDGE (Enhanced Data Rates for GSM Evolution) Radio Access Network (GERAN); UMTS Terrestrial Radio Access Network (UTRAN); LTE Advanced (LTE-A); etc. Additionally, some or all of the aspects described herein can be exploited in legacy telecommunication technologies, e.g., GSM. In addition, mobile as well non-mobile networks (e.g., the Internet, data service network such as internet protocol television (IPTV), etc.) can exploit aspects or features described herein.

While the subject matter has been described above in the general context of computer-executable instructions of a computer program that runs on a computer and/or computers, those skilled in the art will recognize that this disclosure also can or may be implemented in combination with other program modules. Generally, program modules include routines, programs, components, data structures, etc. that perform particular tasks and/or implement particular abstract data types. Moreover, those skilled in the art will appreciate that the inventive methods may be practiced with other computer system configurations, including single-processor or multiprocessor computer systems, mini-computing devices, mainframe computers, as well as personal computers, hand-held computing devices (e.g., PDA, phone), microprocessor-based or programmable consumer or industrial electronics, and the like. The illustrated aspects may also be practiced in distributed computing environments where tasks are performed by remote processing devices that are linked through a communications network. However, some, if not all aspects of this disclosure can be practiced on stand-alone computers. In a distributed computing environment, program modules may be located in both local and remote memory storage devices.

As used in this application, the terms "component," "system," "platform," "interface," and the like, can refer to and/or can include a computer-related entity or an entity related to an operational machine with one or more specific functionalities. The entities disclosed herein can be either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

In another example, respective components can execute from various computer readable media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form.

As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

Various aspects or features described herein can be implemented as a method, apparatus, system, or article of manufacture using standard programming or engineering techniques. In addition, various aspects or features disclosed in this disclosure can be realized through program modules that implement at least one or more of the methods disclosed herein, the program modules being stored in a memory and executed by at least a processor. Other combinations of hardware and software or hardware and firmware can enable or implement aspects described herein, including a disclosed method(s). The term "article of manufacture" as used herein can encompass a computer program accessible from any computer-readable device, carrier, or storage media. For example, computer readable storage media can include but are not limited to magnetic storage devices (e.g., hard disk, floppy disk, magnetic strips...), optical discs (e.g., compact disc (CD), digital versatile disc (DVD), blu-ray disc (BD) ...), smart cards, and flash memory devices (e.g., card, stick, key drive...), or the like.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor may also be implemented as a combination of computing processing units.

In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory, or can include both volatile and nonvolatile memory.

By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or methods herein are intended to include, without being limited to including, these and any other suitable types of memory.

It is to be appreciated and understood that components, as described with regard to a particular system or method, can include the same or similar functionality as respective components (e.g., respectively named components or similarly named components) as described with regard to other systems or methods disclosed herein.

What has been described above includes examples of systems and methods that provide advantages of this disclosure. It is, of course, not possible to describe every conceivable combination of components or methods for purposes of describing this disclosure, but one of ordinary skill in the art may recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

Further aspects of the invention are provided by the subject matter of the following clauses:
1. A system, comprising: a memory that stores computer executable components; a processor that executes computer executable components stored in the memory, wherein the computer executable components comprise: a mesh network component that generates a mesh network of communication datalinks associated with one or more aircrafts based on broadcast data that includes a set of broadcasts associated with an aircraft surveillance system for the one or more aircrafts; and a traffic management component that augments air traffic data and weather data provided by an air traffic management system with sensor data received via the mesh network.
2. The system of clause 1, wherein the mesh network component generates the mesh network of communication datalinks based on a set of directional radio connections between the one or more aircrafts.
3. The system of any preceding clause, wherein the mesh network component generates the mesh network of communication datalinks based on a set of laser connections between the one or more aircrafts.
4. The system of any preceding clause, wherein the mesh network component verifies a number of communication connections by the one or more aircrafts to generate the mesh network.
5. The system of any preceding clause, wherein the aircraft surveillance system is an automatic dependent surveillance-broadcast (ADS-B) system, and wherein the mesh network component determines a location for the one or more aircrafts based on the ADS-B system.
6. The system of any preceding clause, wherein the aircraft surveillance system is a traffic collision avoidance system (TCAS), and wherein the mesh network component determines a location for the one or more aircrafts based on the TCAS system.
7. The system of any preceding clause, wherein the air traffic management system is a digital datalink system associated with aircraft communications addressing and reporting.
8. The system of any preceding clause, wherein the traffic management component further augments wind data provided by the air traffic management system with the sensor data received via the mesh network.
9. A method, comprising: detecting, by a system comprising a processor, broadcast data that includes a set of broadcasts associated with a set of aircrafts; generating, by the system, a mesh network of communication datalinks between the set of aircrafts based on the broadcast data; and augmenting, by the system, air traffic data and weather data provided by an air traffic management system with sensor data received via the mesh network.
10. The method of clause 9, wherein the generating the mesh network comprises generating a set of high bandwidth connections between the set of aircrafts that comprise a higher data rate than the set of broadcasts.
11. The method of either of clause 9 or 10, wherein the generating the mesh network comprises establishing a set of directional radio connections between the set of aircrafts.
12. The method of any of clauses 9 to 11, wherein the generating the mesh network comprises establishing a set of laser connections between the set of aircrafts.
13. The method of any of clauses 9 to 12, wherein the generating the mesh network comprises verifying a number of communication connections associated with the set of aircrafts.
14. The method of any of clauses 9 to 13, wherein the detecting the broadcast data comprises detecting the broadcast data via an automatic dependent surveillance-broadcast system.
15. The method of any of clauses 9 to 14, wherein the detecting the broadcast data comprises detecting the broadcast data via a traffic collision avoidance system.
16. The method of any of clauses 9 to 15, wherein the augmenting comprises receiving the air traffic data and the weather data from a digital datalink system associated with aircraft communications addressing and reporting.
17. The method of any of clauses 9 to 16, wherein the augmenting comprises augmenting the air traffic data, the weather data and wind data provided by the air traffic management system with the sensor data received via the mesh network.
18. A computer readable storage device comprising instructions that, in response to execution, cause a system comprising a processor to perform operations, comprising: detecting a set of unidirectional broadcasts associated with a set of aircrafts; generating a mesh network of communication datalinks between the set of aircrafts based on the set of unidirectional broadcasts; and augmenting air traffic data and weather data provided by an air traffic management system with sensor data received via the mesh network.
19. The computer readable storage device of clause 18, wherein the generating the mesh network comprises generating a set of high bandwidth connections between the set of aircrafts that comprise a higher data rate than the set of unidirectional broadcasts.
20. The computer readable storage device of either of clauses 18 or 19, wherein the augmenting comprises augmenting the air traffic data, the weather data and wind data provided by the air traffic management system with the sensor data received via the mesh network.

## Claims

1. A system, comprising:
a memory that stores computer executable components;
a processor that executes computer executable components stored in the memory, wherein the computer executable components comprise:
a mesh network component that generates a mesh network of communication datalinks associated with one or more aircrafts based on broadcast data that includes a set of broadcasts associated with an aircraft surveillance system for the one or more aircrafts; and
a traffic management component that augments air traffic data and weather data provided by an air traffic management system with sensor data received via the mesh network.

2. The system of claim 1, wherein the mesh network component generates the mesh network of communication datalinks based on a set of directional radio connections between the one or more aircrafts.

3. The system of either of claim 1 or 2, wherein the mesh network component generates the mesh network of communication datalinks based on a set of laser connections between the one or more aircrafts.

4. The system of any preceding claim, wherein the mesh network component verifies a number of communication connections by the one or more aircrafts to generate the mesh network.

5. The system of any preceding claim, wherein the aircraft surveillance system is an automatic dependent surveillance-broadcast (ADS-B) system, and wherein the mesh network component determines a location for the one or more aircrafts based on the ADS-B system.

6. The system of any preceding claim, wherein the aircraft surveillance system is a traffic collision avoidance system (TCAS), and wherein the mesh network component determines a location for the one or more aircrafts based on the TCAS system.

7. The system of any preceding claim, wherein the air traffic management system is a digital datalink system associated with aircraft communications addressing and reporting.

8. The system of any preceding claim, wherein the traffic management component further augments wind data provided by the air traffic management system with the sensor data received via the mesh network.

9. A method, comprising:
detecting, by a system comprising a processor, broadcast data that includes a set of broadcasts associated with a set of aircrafts;
generating, by the system, a mesh network of communication datalinks between the set of aircrafts based on the broadcast data; and
augmenting, by the system, air traffic data and weather data provided by an air traffic management system with sensor data received via the mesh network.

10. The method of claim 9, wherein the generating the mesh network comprises generating a set of high bandwidth connections between the set of aircrafts that comprise a higher data rate than the set of broadcasts.

11. The method of either of claim 9 or 10, wherein the generating the mesh network comprises establishing a set of directional radio connections between the set of aircrafts and/or establishing a set of laser connections between the set of aircrafts.

12. The method of any of claims 9 to 11, wherein the generating the mesh network comprises verifying a number of communication connections associated with the set of aircrafts.

13. The method of any of claims 9 to 12, wherein the detecting the broadcast data comprises detecting the broadcast data via an automatic dependent surveillance-broadcast system and/or detecting the broadcast data via a traffic collision avoidance system.

14. The method of any of claims 9 to 13, wherein the augmenting comprises receiving the air traffic data and the weather data from a digital datalink system associated with aircraft communications addressing and reporting and, preferably, augmenting the air traffic data, the weather data and wind data provided by the air traffic management system with the sensor data received via the mesh network.

15. A computer readable storage device comprising instructions that, in response to execution, cause a system comprising a processor to perform operations, comprising:
detecting a set of unidirectional broadcasts associated with a set of aircrafts;
generating a mesh network of communication datalinks between the set of aircrafts based on the set of unidirectional broadcasts; and
augmenting air traffic data and weather data provided by an air traffic management system with sensor data received via the mesh network.
